# EUROPEAN PATENT SPECIFICATION

(11) **EP 3 152 267 B1**
(45) Date of publication and mention of the grant of the patent: **21.04.2021**
(21) Application number: 15807208.2
(22) Date of filing: 08.06.2015
(51) Int. Cl.: C09D 11/101, C09D 11/38, C09D 11/03

(54) **ENERGY CURABLE PRINTING INKS AND COATING COMPOSITIONS CONTAINING METHL PHENYL GLYCOXYLATE**
ENERGIEHÄRTBARE DRUCKFARBEN UND BESCHICHTUNGSZUSAMMENSETZUNGEN MIT METHLPHENYLGLYCOXYLAT
ENCRES D'IMPRESSION DURCISSABLES PAR UNE ÉNERGIE ET COMPOSITIONS DE REVÊTEMENT CONTENANT DU GLYCOXYLATE DE PHÉNYLMÉTHYLE

(30) Priority: 09.06.2014 US 201462009494 P
(43) Date of publication of application: 12.04.2017
(73) Proprietor: Sun Chemical Corporation, Parsippany, NJ 07054 (US)
(72) Inventor: LAWRENCE, Clive Edward, London W5 4XD (GB)
(74) Representative: Cockerton, Bruce Roger
(86) International application number: PCT/US2015/034658
(87) International publication number: WO 2015/191440

(56) References cited:
- EP-A1- 3 110 564
- US-A- 4 024 297
- US-A1- 2009 208 663
- US-B2- 7 893 127
- US-B2- 7 893 127

## Description

### FIELD OF THE INVENTION

The present invention is directed to low toxicity energy curable printing inks and coating compositions that contain methyl phenyl glyoxylate.

### BACKGROUND TO THE INVENTION

Energy curable printing inks and coating compositions are used in a wide range of applications such as lens coating and must exhibit multi-substrate adhesion, sufficient flexibility and impact resistance.

These compositions typically require the presence of highly toxic monomers including vinyl nitrogen containing heterocyclic monomers such as N-vinyl pyrollidone (NVP) and N-vinyl caprolactam (NVCap) or acrylamides such as acrylol morpholine (ACMO) and N-vinylformamide and thus alternative printing inks and compositions are required that avoid the use of such monomers.

US 2006/0052477 A1 is directed to inks for in-mould decoration which comprise an energy-curable resin, additional reactive monomers and/or oligomers and may include a methylphenyl glyoxylate photoinitiator.

US2008/0045618 A1 is directed to low viscosity ultra-violet UV curable ink formulations including vinyl ether, a mono-acrylate component, a photocation polymerization initiator and a free radical photoinitiator such as methylphenyl glyoxylate.

US 2012/0121845 A1 is directed to high transparency coatings comprising a radiation curing binder containing ethylenically unsaturated acrylate or methacrylate groups.

US 4,586,996 is directed to a surface hardener for a nylon lens comprising a polyfunctional acylic ester monomer and a methylphenyl glyoxylate photoinitiator.

US 4,650,845 is directed to ultra-violet light curable compositions for abrasion resistant articles.

US 6,455,653 is directed to a composition and methods for the production of ophthalmic lenses wherein the composition comprises monofunctional, difunctional and multifunctional acrylate monomers.

US 5,529,728 is directed to a method, apparatus and composition for making and coating a plastic lens wherein the compositions comprise difunctional and multifunctional acrylate monomers and a photoinitiator.

US 6,022,498 is directed to a method for preparing an eyeglass lens which requires applying ultraviolet light to a lens forming composition which comprises a polyethylenic-functional monomer and a methylphenyl glyoxylate.

US 2007/0154632 A1 is directed to a UV curing glass printing ink and glass printing lacquer which contains at least one photoinitiator and an epoxy resin which is dissolved in a mono, di, or higher acrylate or methacrylate monomer.

US 8,419,847 is directed to UV or (electron beam) EB screen printing inks which contain a high amount of renewable/sustainable material which comprises an epoxidized vegetable oil or animal oil, a cationic photoinitiator and optionally a free radical photoinitiator.

WO92/012851 is directed to a method, apparatus and composition for making plastic lenses wherein the composition comprises a methylphenyl glyoxylate photoinitator.

US 2012/0262664 A1 is directed to a process for coating a polycarbonate substrate by applying a composition comprising a radiation curing binder resin.

WO1994/004345 is directed to an apparatus and composition for coating a plastic lens wherein the composition contains one or more functional monomers, a photoinitiator and a dye.

US 7,399,793 is directed to a UV curable clearcoat which comprises both monofunctional and multifunctional acrylate or methacrylate monomers and a photoinitiator.

WO2011/084554 is directed to a radiation curable floor coating comprising a difunctional acrylate monomer and a photoinitiator.

US 7,893,127 is directed to radiation curable compositions which comprise an ethylenically unsaturated oligomer and an ethylenically unsaturated monofunctional monomer, optionally an additional ethylenically unsaturated polyfunctional component and/or a chain transfer agent.

WO 98/051746 is directed to a radiation curable coating material and its use for multi-coat paint systems, especially for coating packaging containers wherein the material comprises a radiation curable binder having at least two acrylic ester and/or methacrylic ester groups.

### SUMMARY OF THE INVENTION

The present invention provides an energy curable printing ink or coating composition comprising between 0.5 to 10 wt% of methyl phenyl glyoxylate, between 10 to 60 wt% of at least one monofunctional acrylate or methacrylate monomer, between 10 to 25 wt% of at least one difunctional acrylate or methacrylate monomer and less than 5 wt% vinyloxyethoxy ethyl acrylate, divinylbenzene, and high solvency monofunctional monomers selected from vinyl amides, N-vinyl pyrollidone, N-vinyl formamide, acrylamides, substituted acrylamides, tetrahydrofurfuryl acrylate, tetrahydrofurfuryl methacrylate, ethoxyethoxy ethyl acrylate, hydroxyethyl acrylate, caprolactone, caprolactone acrylate and cyclohexyl vinylether; wherein the printing ink or coating composition is free of N-vinyl caprolactam and acryloylmorpholine.

The present invention also provides a substrate comprising a printing ink or coating composition on a surface of the substrate.

Finally the present invention further provides a method of producing a substrate with a printing ink or coating composition on a surface thereof comprising
a) applying a printing ink or coating composition onto a surface of the substrate and
b) drying the composition.

These and other objects, advantages, and features of the invention will become apparent to those persons skilled in the art upon reading the details of the methods and formulations as more fully described below.

### DETAILED DESCRIPTION OF THE INVENTION

It has been found that the printing inks or coating compositions according to the present invention provide adhesion to a wide range of substrates, exhibit fast curing, high impact resistance and flexibility, good thermal and storage stability with respect to yellowing and odour and provide low levels of swelling in print application components, such as squeegees and flexographic plates.

Furthermore the inks and compositions also provide a more favourable toxicology, have a lower hazard classification and avoid the use of monomers such as N-vinyl caprolactam and acryloyl morpholine (ACMO).

In particular, the use of N-vinyl caprolactam in such formulations is undesirable due to toxicological concerns and restrictive product labelling. Furthermore alternative monomers such as tertiary acrylamide acryloyl morpholine (ACMO) when used in amounts above 10 wt% or more are similarly problematic.

Additionally, formulations containing N-vinyl caprolactam are sensitive to water and acidic components which results in a loss of adhesion, discolouration and instability. Furthermore they also provide poor water barriers which consequently reduce outdoor coating durability.

Finally, N-vinyl caprolactam has recently been subject to a change in its hazard classification resulting in a number of manufacturers removing this type of material from their formulations altogether.

The printing ink or coating compositions may further comprise between 0.1 to 10 wt% of at least one trifunctional or higher acrylate or methacrylate monomer and mixtures thereof and may also contain between 0.1 to 60 wt% of at least one mono or multifunctional acrylate or methacrylate oligomer and mixtures thereof.

Usually the printing ink or coating composition comprises between 0.1 to 25 wt% of an inert resin or mixtures thereof and typically contains between 0.1 to 15 wt% of at least one further additional photoinitiator.

The printing inks and coating compositions contain no more than 5 wt% but are advantageously substantially free of vinyloxyethoxy ethyl acrylate, divinylbenzene and high solvency monofunctional monomers wherein the solvency refers to the ability of the monomer to swell substantially, dissolve or etch rigid polymer substrates like PVC (polyvinylchloride) and PMMA (polymethyl methacrylate). High solvency monofunctional monomers include materials vinyl amides such as N-vinyl caprolactam, N-vinyl pyrollidone, N-vinyl formamide or acrylamides or substituted acrylamides such as acryloylmorpholine, tetrahydrofurfuryl acrylate, tetrahydrofurfuryl methacrylate, ethoxyethoxy ethyl acrylate, hydroxyethyl acrylate, caprolactone, caprolactone acrylate and cyclohexyl vinylether. The printing inks and coating compositions are free of N-vinyl caprolactam and acryloylmorpholine.

The composition may comprise no more than 5 wt %, but are substantially free of non reactive organic solvents. The organic solvents include cyclic hydrocarbons, aromatic hydrocarbons, ketones, aldehydes, alcohols, ethers, esters, aminoalcohols, higher fatty acids, carbitols, lactates, higher fatty esters, glycol, glycolethers, alkyl pyrollidones, NN dimethylformamide, lactones, NN dimethylacetamide, vinyl ethers and glycol divinylethers.

Furthermore the printing inks and coating compositions preferably contain no more than 5 wt% but are advantageously substantially free of water.

The printing ink or coating composition preferably contains between 1 to 8 wt% of methyl phenyl glyoxylate, more preferably between 2 to 6 wt% and advantageously between 3 to 5 wt% of methyl phenyl glyoxylate.

The printing ink or coating composition preferably contains between 15 to 50 wt% of monofunctional acrylate or methacrylate monomer and advantageously between 20 to 40 wt% of monofunctional acrylate or methacrylate monomer.

The monofunctional acrylate or methacrylate monomer is typically an ethylenically unsatutated monomer selected from selected from C₁₂ to C₁₄ alkyl methacrylate, C₁₆ to C₁₈ alkyl acrylate, C₁₆ to C₁₈ alkyl methacrylate, isodecyl acrylate, lauryl acrylate, methoxy polyethylene glycol (350) monomethacrylate, octyldecyl acrylate, polypropylene glycol monomethacrylate, stearyl acrylate and tridecyl acrylate and mixtures thereof.

Advantageously, the monofunctional acrylate or methacrylate monomer has a cyclic structure and is typically selected from phenoxyethyl acrylate (PEA), cyclic trimethyl propane formal acrylate (CTFA), isobornyl (meth) acrylate (IBOA), t-butyl cyclohexyl acrylate, 3,3,5,-trimethyl cyclohexyl acrylate and ethoxylated (4) nonyl phenol acrylate and mixtures thereof and is preferably cyclic trimethyl propane formal acrylate (CTFA).

The printing ink or coating composition preferably contains between 10 to 20 wt% of difunctional acrylate or methacrylate monomer and advantageously between 12 to 18 wt% of difunctional acrylate or methacrylate monomer.

The difunctional acrylate or methacrylate monomer is preferably selected from 3-butylene glycol dimethacrylate, 1,4-butanediol dimethacrylate, 1,6 hexanediol diacrylate, 1,6 hexanediol dimethacrylate, 1, 5 pentadiol diacylate, alkoxylated diacrylate, diethylene glycol dimethacrylate, dipropylene glycol diacrylate, ethoxylated (10) bisphenol A diacrylate, ethoxylated (2) bisphenol A dimethacrylate, ethoxylated (3) bisphenol A diacrylate, ethoxylated (3) bisphenol A dimethacrylate, ethoxylated (4) bisphenol A diacrylate, ethoxylated (4) bisphenol A dimethacrylate, ethoxylated bisphenol A dimethacrylate, ethoxylated(10) bisphenol dimethacrylate, ethylene glycol dimethacrylate, polyethylene glycol (200) diacrylate, polyethylene glycol (400) diacrylate, polyethylene glycol (400) dimethacrylate, polyethylene glycol (400) dimethacrylate, polyethylene glycol (600) diacrylate, polyethylene glycol (600) dimethacrylate, polyethylene glycol 400 diacrylate, propoxylated (2) neopentyl glycol diacrylate, tetraethylene glycol diacrylate, tetraethylene glycol dimethacrylate, tricyclodecane dimethanol diacrylate, tricyclodecanedimethanol dimethacrylate, triethylene glycol diacrylate, triethylene glycol dimethacrylate and tripropylene glycol diacrylate and mixtures thereof.

More preferably the difunctional acrylate or methacrylate monomer is selected from 1, 6 hexanediol diacrylate, dipropylene glycol diacrylate and 1, 5 pentadiol diacylate, alkoxylated diacrylate and mixtures thereof and advantageously is 1, 6 hexanediol diacrylate.

The printing ink or coating composition may typically contain between 0.1 to 5 wt% of at least one trifunctional or higher acrylate or methacrylate monomer and preferably between 1 to 3 wt% of at least one trifunctional or higher acrylate or methacrylate monomer.

Whilst it is possible to completely replace the difunctional acrylate or methacrylate monomer with a trifunctional or higher acrylate or methacrylate monomer in the printing ink or coating composition the presence of the difunctional acrylate or methacrylate monomer contributes to the advantageous properties as herein mentioned above.

The trifunctional or higher acrylate or methacrylate monomer is preferably selected from ethoxylated (15) trimethylolpropane triacrylate, ethoxylated (3) trimethylolpropane triacrylate, ethoxylated (6) trimethylolpropane triacrylate, ethoxylated (9) trimethylolpropane triacrylate, ethoxylated 5 pentaerythritol triacrylate, ethoxylated(20) trimethylolpropane triacrylate, propoxylated (3) glyceryl triacrylate, trimethylolpropane triacrylate, propoxylated (5.5) glyceryl triacrylate, pentaerythritol triacrylate, propoxylated (3) glyceryl triacrylate, propoxylated (3) trimethylolpropane triacrylate, trimethylolpropane triacrylate, trimethylolpropane trimethacrylate, tris (2-hydroxy ethyl) isocyanurate triacrylate, ditrimethylolpropane tetraacrylate, dipentaerythritol pentaacrylate, ethoxylated (4) pentaerythritol tetraacrylate, pentaerythritol tetraacrylate and dipentaerythritol hexaacrylate and mixtures thereof.

The printing inks and coating compositions may typically contain between 0.5 to 50 wt% of at least one mono or multifunctional acrylate or methacrylate oligomer, preferably between 10 to 40 wt% and advantageously between 15 to 25 wt% of at least one mono or multifunctional acrylate or methacrylate oligomer.

The oligomers are typically selected from epoxy acrylates, polyurethane acrylates, polyester acrylates, polyether acrylates, or their methacrylates and mixtures thereof.

Additionally the printing inks and coating compositions may typically contain between 5 to 20 wt% of resin, preferably between 10 to 20 wt% and advantageously between 15 to 20 wt%.

Usually the resins are selected from acrylics, aldehyde, ketone, vinyl, polyester, cellulose derivatives and hydrocarbon resins and mixtures thereof.

The printing inks and coating compositions usually contain between 0.5 to 10 wt% of additional photoinitiator, preferably between 1 to 5 wt%, and advantageously between 2 to 4 wt% of additional photoinitiator.

The additional photoinitiator is preferably a free radical photoinitiator and is advantageously selected from α-hydroxyketones, such as 1-hydroxy-cyclohexyl-phenyl-ketone, 2-hydroxy-2-methyl-1-phenyl-1-propanone, 2-hydroxy-1-{4-[4-(2-hydroxy-2-methyl-propionyl)-benzyl]-phenyl}-2-methyl-propan-1-one, 2-hydroxy-1-[4-(2-hydroxyethoxy)phenyl]-2-methyl-1-propanone; acylphosphine oxides such as 2,4,6-trimethylbenzoyl-diphenylphosphine oxide, 2,4,6-trimethylbenzoyl-diphenyl phosphinate, bis(2,4,6-trimethylbenzoyl)-phenylphosphineoxide; α-aminoketones such as 2-methyl-1[4-(methylthio)phenyl]-2-morpholinopropan-1-one, 2-benzyl-2-dimethylamino-1-(4-morpholinophenyl)-butanone-1, 2-dimethylamino-2-(4-methyl-benzyl)-1-(4-morpholin-4-yl-phenyl)-butan-1-one and mixtures thereof.

Other suitable photoinitiators include benzil dimethyl ketal, thioxanthone initiators 2-4-diethylthioxanthone, isopropylthioxanthone, 2-chlorothioxanthone, 1-chloro-4-propoxythioxanthone, 4-phenylbenzophenone, 4-methylbenzophenone, methyl-2-benzoylbenzoate, 4-benzoyl-4-methyldphenyl sulphide, phenylglyoxylate initiators phenyl glyoxylic acid methyl ester, oxy-phenyl-acetic acid 2-[2-hydroxy-ethoxy]-ethyl ester or oxy-phenyl-acetic acid 2-[2-oxo-2-phenyl-acetoxy-ethoxy]-ethyl ester, titanocen radical initiator titanium bis( 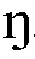 5-2,4-cyclopentadien-1-yl)bis[2,6-difluoro-3-(1h-pyrrol-1-yl)phenyyl], [1-(4-phenylsulfanylbenoyl)heptylideneamino]benzoate, [1-[9-ethyl-6-(2-methylbenzoyl)carbazol-3-yl]ethylideneamino]acetate, ethyl benzoylformate, 1-phenyl-1,2-propanedione-2-(o-ethoxycarbonyl)oxime, 4,4,4-(hexyamethyltriamino)triphenyl methane, 2-benzyl-2-dimethylamino-4-morpholinobutyrophenone, 2-methyl-1-(4-methylthiophenyl)-2-morpholineopropan-1-one, 4,4-bis(diethylamino)benzophenone and 2-ethyl anthraquinone and mixtures thereof.

The additional photoinitiator may also be a polymeric photoinitiator such as Omnipol TX from IGM or Speedcure 7040 from Lambson, polymeric benzophenone derivatives (Genopol BP-1 from Rahn, Omnipol BP from IGM or Speedcure 7005 from Lambson) and polymeric thioxanthone derivatives (Genopol TX-1 from Rahn, Omnipol TX from IGM or Speedcure 7010 from Lambson).

The printing ink or coating composition may also include a filler and advantageously further comprises one or more additives selected from the group consisting of stabilisers, surfactants, defoamers, surface control additives, slip additives, waxes, wetting agents and acidic adhesion promoters.

The defoamers, which prevent the formation of foam during manufacture of the ink and also while printing, include TEGO FOAMEX N, FOAMEX 1488, 1495, 3062, 7447, 800, 8030, 805, 8050, 810, 815N, 822, 825, 830,831, 835, 840,842, 843, 845, 855, 860, 883, TEGO FOAMEX K3, TEGO FOAMEX K7/K8 and TEGO TWIN 4000 available from EVONIK and BYK-066N, 088, 055, 057, 1790, 020, BYK-A 530, 067A, and BYK 354 available from BYK and mixtures thereof.

The surface control additives, which are used to control the surface tension of the ink which is required to adjust the wetting of the substrate and can also be used to control the level of slip and scratch resistance of the coating may include TEGO FLOW300, 370,425, TEGO GLIDE 100, 110,130,406, 410,411, 415, 420, 432, 435, 440, 482, A115, B1484, TEGO GLIDE ZG400, TEGO RAD2010, 2011, 2100, 2200N, 2250, 2300, 2500, 2600, 2650, 2700, TEGO TWIN 4000, 4100, TEGO WET 240, 250, 260, 265, 270, 280, 500, 505, 510 and TEGO WET KL245 available from EVONIK; BYK 333, 337, BYK UV3500, BYK 378, 347, 361, BYK UV3530, 3570, CERAFLOUR 998, 996, NANOBYK 3601, 3610, 3650 and CERMAT 258 available from BYK; EBECRYL 350, 1360, MODAFLOW 9200, EBECRYL 341 available from CYTEC; and aliphatic silicone acrylate CN9800 available from SARTOMER.

The printing inks and coating compositions may optionally contain one or more colorants, including pigments and/or dyes, solid fillers and solid waxes. Examples of suitable organic or inorganic pigments include carbon black, zinc oxide, titanium dioxide, phthalocyanine, anthraquinones, perylenes, carbazoles, monoazo and disazobenzimidazoles, rhodamines, indigoids, quinacridones, diazopyranthrones, dinitranilines, pyrazoles, diazopyranthrones, dinityanilines, pyrazoles, dianisidines, pyranthrones, tetracholoroisoindolines, dioxazines, monoazoacrylides and anthrapyrimidines. The dyes include but are not limited to azo dyes, anthraquinone dyes, xanthene dyes, azine dyes, combinations thereof and the like.

Commercial organic pigments classified according to Color Index International according to the following trade designations, blue pigments PB1, PB15, PB15:1, PB15:2, PB15:3, PB15:4, PB15:6, PB16, PB60; brown pigments PB5, PB23, and PB265; green pigments PG1, PG7, PG10 and PG36; yellow pigments PY3, PY14, PY16, PY17, PY24, PY65, PY73, PY74 PY83, PY95, PY97, PY108, PY109,PY110, PY113, PY128, PY129,PY138, PY139, PY150, PY151, PY154, PY156, PY175, PY180 and PY213; orange pigments PO5, PO15, PO16, PO31, PO34, PO36, PO43, PO48, PO51, PO60, PO61 and PO71; red pigments PR4, PR5, PR7, PR9, PR22, PR23, PR48, PR48:2, PR49, PR112, PR122, PR123, PR149, PR166, PR168, PR170, PR177, PR179, PR190, PR202, PR206, PR207, PR224 and PR254: violet pigments PV19, PV23, PV32, PV37 and PV42 and black pigments may be incorporated therein.

Other non pigmentary solids may be optionally included, which may include waxes. Examples include calcium carbonate, clays, silicates, silicas, talcs, polyolefin and polyamide powders. These powders may be present in the range 1 to 30 wt%.

The pigments, fillers and waxes are preferably milled or dispersed to typically less than 10 micrometers with a preferred particle size distribution of 0.2-15 microns, more preferably 0.2 to 12 microns dependent on application. The pigment dispersion will typically contain 20 to 40 wt% pigment, a monomer which can be a mono or multifunctional (meth) acrylate monomer, with added stabilizer, an inhibitor, a dispersant and optionally a pigment additive/synergist and/or a wetting additive/oligomer/resin. The ratio of pigment to dispersant is usually 1:2 to 9:1.

Typical dispersants include EFKA 7414, 7476, 7477, 7700, 7701, 7702, 7710, 7731 and 7732 available from BASF and SOLSPERSE 1700, 1900, 24000SC/GR, 26000, 32000, 33000, 35000, 36000, 39000, 41000 and 71000 available from LUBRIZOL. Examples of additive/synergists to aid dispersion stability include SOLSPERSE 5000, 12000 and 22000 from LUBRIZOL.

Other acidic additives may also be included such as methylacryloxyethyl succinate or maleate, acrylatedphonoacetic acid, methyl/acrylated acidic derivatives and bis(2-hydroxyethylmethacrylate ester) of phosphoric acid.

Typically the printing ink or coating composition is substantially free of cationinc photoinitiators and advantageously contains only free radical photoinitiators.

The printing ink or coating composition is advantageously substantially free of N-vinyl pyollidone (NVP) and may also be substantially free of N-vinyl formamide. The printing ink or coating composition is free of N-vinyl caprolactam (NV-Cap) and arcyloylmorpholine (ACMO).

The energy curable printing inks or coating compositions according to the present invention can be typically applied to a number of substrates using screen, such as flat-bed (cylinder and rotary), flexographic and gravure printing.

Consequently the printing inks and coating compositions must vary in viscosity and rheology in order to be applied evenly to the substrates during the various types of printing process.

Typically when the printing inks and coating compositions are formulated as screen printing inks they have a viscosity in the range 0.2 to 5.0 Pa·s, measured on a cone and plate viscometer at 25°C.

Typically when the printing inks and coating compositions are formulated as flexographic printing inks they have a viscosity in the range 0.1 to 1.0 Pa·s, measured on a cone and plate viscometer at 25°C.

Typically when the printing inks and coating compositions are formulated as gravure printing inks they have a viscosity in the range 0.01 to 0.2 Pa·s, measured on a cone and plate viscometer at 25°C.

The substrates may include polyolefins, PETG, rigid polyvinylchloride (PVC), polystyrene (PS), Poly(Acrylonitrile Butadiene Styrene(ABS), polycarbonate (PC), metals, cellulose and cotton based papers and plastics.

The inks and coatings must exhibit good adhesion to the substrate surface. However, when the bond between the ink or coating to the substrate surface is to strong this can embrittle plastic substrates, which occurs via a crack propagation mechanism, wherein a crack initiated in the brittle coating propagates across the boundary to the underlying substrate. Hence a brittle coating, when impact tested, might crack itself and flake off where adhesion is poor, or crack the underlying substrate if the bonding is too strong.

In attempt to optimize substrate adhesion and plasticise formulations solvents and/or non-reactive plasticisers have been incorporated which may result in flash-point problems and film softening due to the presence of unreacted materials. However, the printing inks and coating compositions according to the present invention are preferably substantially free of these types of materials.

Solvent based coatings when applied to a swellable plastic substrate relies on solvation of the underlying plastic substrate, allowing interpenetration of the dissolved coating polymers with the substrate and leads to strong bonding upon drying. Surprisingly it has been found that the use of methyl phenyl glyoxylate, in combination with lower solvency monomers, enhances the formation of cured interpenetrating monomer and polymer networks and thus provides optimum bonding with the substrate.

The printing inks and coating compositions according to the present invention provide a reduced crack propagation tendency at the coating substrate interface, while retaining film hardness, abrasion resistance, low blocking and reduced interlayer softening. The inks and compositions also adhere well to non swellable plastic substrates and other substrate surfaces due to good wetting, penetration, low shrinkage and good bonding to surface groups of the substrates.

The printed substrates may be dried/cured using a traditional mercury vapor discharge lamp to generate UV radiation. Solid state UV radiation sources such as UV light emitting diodes (LEDs) can also be used as the source of UV radiation. The printing inks and coating compositions of the present invention could also be formulated to cure using other radiation sources, such as microwave, infrared, electron beam, visible light and x-ray.

The invention is further described by the examples given below.

### EXAMPLES

The following examples illustrate specific aspects of the present invention and are not intended to limit the scope thereof in any respect and should not be so construed.

### Example 1: Properties of cyan screen printing ink compositions containing phenylglyoxylate.

Process cyan screen ink Examples 1A-1G suitable for multi-purpose applications were prepared according to the formulations in Table 1, using a rotor-stator (Silverson) mixer.

Example 1A is a preferred inventive formulation containing methyl phenyl glyoxylate photoinitiator; Examples 1B and 1D are comparative examples containing other phenyl glyoxylate materials; Examples 1C, 1E, 1F, 1G are comparative Examples that do not contain phenyl glyoxylate materials.

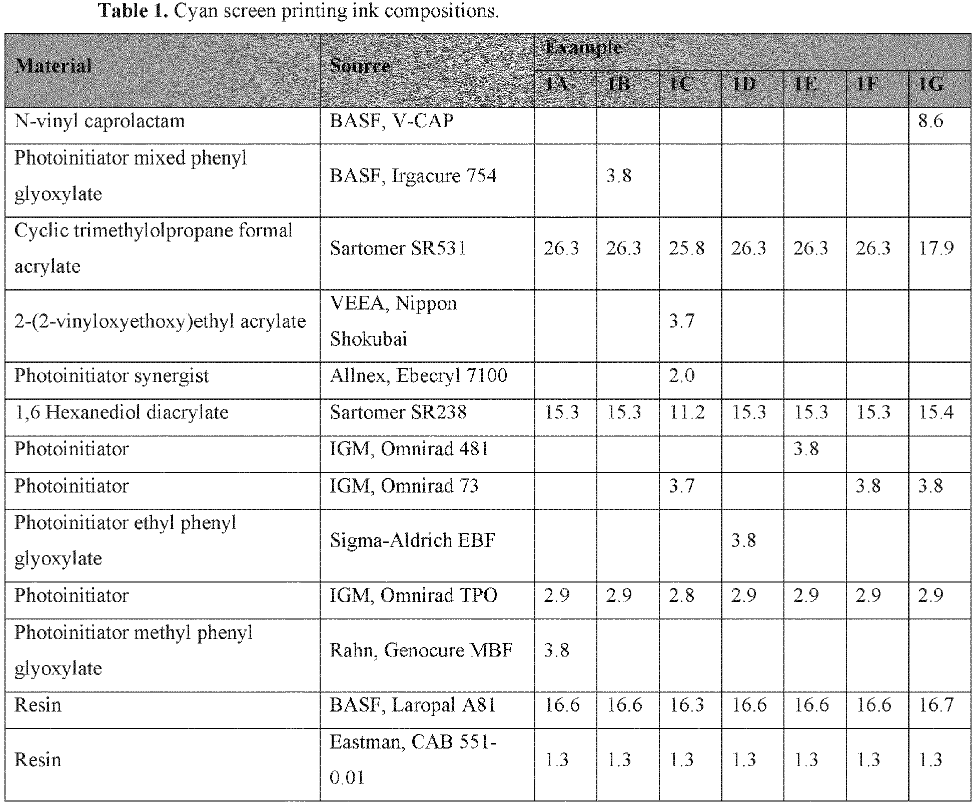

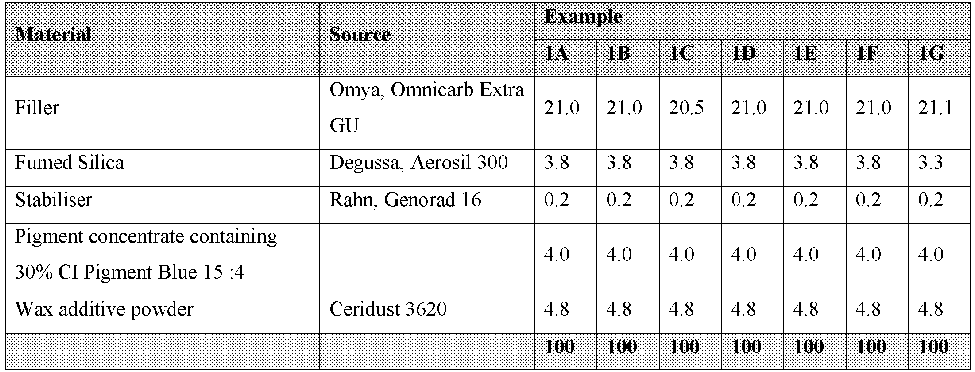

### Printing Ink Testing:

The Screen ink printable compositions 1A-1G were printed using a 150T mesh screen onto 240 micron rigid PVC (white) and cured using a Natgraph, two lamp medium pressure mercury ultra-violet curing unit, with 125mJ/cm per layer exposure. The resulting prints were tested for cross-hatch adhesion according to ISO 2049 and also for pencil hardness. The results are displayed below in Table 2. Viscosities of the printing compositions were measured using a REL cone and plate viscometer, large cone speed 2 at 25°C and were found to be in the range 0.9-1.4 Pa s.

**Table 2. Cross hatch adhesion and pencil hardness.**

| **Example** | **# of Layers** | **Cross-hatch Tape Results** | **Pencil Hardness** |
|---|---|---|---|
| Cyan 1A | 1 | 0 | 3H |
| Cyan 1A | 4 | 0 | 2H |
| Cyan 1B | 1 | 0 | H |
| Cyan 1B | 4 | 0 | HB |
| Cyan 1C | 1 | 0 | 2H |
| Cyan 1C | 4 | 0 | H |
| Cyan 1D | 1 | 0 | 2H |
| Cyan 1D | 4 | 0 | H |

| **Example** | **# of Layers** | **Cross-hatch Tape Results** | **Pencil Hardness** |
|---|---|---|---|
| Cyan 1E | 1 | 0 | H |
| Cyan 1E | 4 | 0 | H |
| Cyan 1F | 1 | 0 | H |
| Cyan 1F | 4 | 0 | HB |
| Cyan 1G | 1 | 0 | 2H |
| Cyan 1G | 4 | 0 | 2H |

| | | | |
|---|---|---|---|
| (0 = no removal; 5 = greater than 65% removal) | | | |

The results in Table 2 demonstrate that inventive Example 1A has improved pencil scratch adhesion compared with the other glyoxylates tested (Examples 1B and ID) and has even better pencil scratch adhesion than N-vinyl caprolactam containing Example 1G. Examples 1E and 1F contain no phenylglycoxalate or N-vinyl caprolactam and show reduced pencil scratch adhesion. Formulation 1C, exhibits good performance, but contains the monomer VEEA and has greatly reduced impact resistance (see below). Pencil hardness is known in the art as a test for assessing relative hardness or scratch resistance. The pencil hardness test uses the varying hardness values of graphite pencils to evaluate a coating's hardness. The lowest hardness value of the pencil which marks the coating determines the coating's hardness rating. Determination of film hardness by pencil test was performed using ASTM D3363 - 05(2011)e2 Standard Test Method for Film Hardness by Pencil Test or BS EN ISO 15184:2012 Paints and varnishes.

### Impact Resistance

The printing ink Examples 1A-1G were printed using a 150T mesh on 240 micron white rigid PVC, 1-4 layers, cured using a Natgraph medium pressure mercury ultra-violet curing unit, with 250mJ./cm2 per layer. The 4 layer build was impact tested using a Sheen impact tester with a 1 kg semi-circular impacter was used with drop heights of 10cm, 20cm and 30cm see Table 3 below. These tests are comparative in nature.

**Table 3. Impact Resistance Results.**

| **Formulation** | **Drop height 10cm** | **Drop height 20 cm** | **Drop height 30 cm** |
|---|---|---|---|
| Cyan 1A | FILM OK | FILM OK | FILM BREAKS |
| Cyan 1B | FILM OK | FILM OK | FILM OK |
| Cyan 1C | FILM BREAKS | FILM BREAKS | FILM BREAKS |
| Cyan 1D | FILM OK | FILM OK | FILM OK |
| Cyan 1E | FILM OK | FILM OK | FILM BREAKS |
| Cyan 1F | FILM OK | FILM OK | FILM OK |
| Cyan 1G | FILM OK | FILM BREAKS | FILM BREAKS |

| | | | |
|---|---|---|---|
| FILM OK = printed substrate dented, but intact with no breaks. FILM BREAKS = in places, both film and substrate shatters. | | | |

The results in Table 3 demonstrate that Example 1A, a composition of the present invention, has superior impact resistant performance to N-vinyl caprolactam in 1G and (VEEA) in 1C. The phenylglyoxylates in 1A, 1B and 1D have similar impact resistance to the other initiators tested (IE and IF). The impact resistance is greatly reduced in Example 1C, due to the presence of the monomer (VEEA).

### Squeegee swelling

Squeegee swelling tendencies of Examples 1A-1G were assessed by an internally developed test, where a 2g drop of ink of diameter 15mm is dispensed onto the test rubber squeegee and left for 24 hours at 20°C. After the time has expired, the ink is cleaned off and the effect on the squeegee measured with a digital micrometer. The results are recorded in Table 4 below.

**Table 4. Squeegee Swelling Results.**

| **Example** | **Swelling microns Marathon Red TS** | **Swelling microns Printmor Green** |
|---|---|---|
| Cyan 1A | 42 | 43 |
| Cyan 1B | 53 | 47 |
| Cyan 1C | 48 | 46 |
| Cyan 1D | 58 | 50 |
| Cyan 1E | 42 | 40 |
| Cyan 1F | 44 | 45 |
| Cyan 1G | 65 | 60 |

Example 1A shows good utility and gives good performance in this squeegee swelling test. Example 1G, containing N-vinyl caprolactam (NVC), is particularly poor. The other phenylglyoxylates, 1B and 1D are considerably worse than 1A. It is to be noted that the laminated construction squeegees like the Marathon Red are often more susceptible to swelling than the single layer constructions like Printmor. Cyan 1E and 1F have reduced swelling compared with 1G, but these changes also reduced adhesion on some substrates (see Table 5).

### Adhesion

Examples 1A-1G were printed onto Priplac (sheet polypropylene) Correx (fluted polypropylene), polycarbonate, rigid polystyrene, rigid acrylic and rigid PETG using a 150T mesh and cured at a dose of 250mJ/cm2 per layer under a medium pressure mercury arc lamp on a Natgraph UV rig. Their adhesion to the test substrates was then tested for 1 layer and 4 layers, with the cross- hatch adhesion test (ISO 2409) using a cutter and Tessa adhesive tape. Results are given in numerical categories according to the amount of ink removed from zero (perfect, no ink removed) to 5 (>65% ink removed). These results are given in table 5.

**Table 5. Crosshatch Adhesion Results.**

| **Example (Layers)** | **Crosshatch adhesion test results** | | | | | |
|---|---|---|---|---|---|---|
| | **Polypropylene sheet** | **Polycarbonate** | **Fluted Polypropylene** | **Rigid Polystyrene** | **Rigid PMMA** | **Rigid PETG** |
| 1A (1L) | 0 | 0 | 0 | 0 | 1 | 0 |
| 1A (4L) | 0 | 0 | 0 | 0 | 4 | 0 |
| 1B (1L) | 0 | 0 | 0 | 2 | 3 | 0 |
| 1B (4L) | 0 | 5 | 0 | 5 | 5 | 0 |
| 1C (1L) | 0 | 0 | 0 | 0 | 5 | 0 |
| 1C (4L) | 0 | 0 | 0 | 1 | 5 | 0 |
| 1D (1L) | 0 | 0 | 0 | 0 | 2 | 0 |
| 1D (4L) | 0 | 0 | 0 | 4 | 5 | 0 |
| 1E (1L) | 0 | 0 | 0 | 5 | 3 | 0 |
| 1E (4L) | 0 | 5 | 0 | 3 | 5 | 0 |
| 1F (1L) | 0 | 0 | 0 | 1 | 3 | 0 |
| 1F (4L) | 0 | 3 | 0 | 3 | 5 | 0 |
| 1G (1L) | 0 | 0 | 0 | 0 | 2 | 0 |
| 1G (4L) | 0 | 5 | 0 | 0 | 5 | 0 |

The results in Table 5 demonstrate that the inks of the present application containing the preferred methyl phenylglyoxylate (1A) can be used in screen printable formulations with significantly improved adhesion compared to a typical standard formulation (1G) containing NVC. It should also be noted that the 1A inventive ink has superior performance to Example 1C (containing VEEA). Examples 1E and 1F are softer and have more surface tack when examined off-line, and 1G and 1C, as previously mentioned, are not sufficiently impact resistant when printed on rigid PVC. The ethyl phenylglyoxylate, 1B is not as good as 1A, but better than 1G.

### Example 2: Cyan screen printing ink compositions containing different concentrations of methyl phenylglyoxylate.

Screen printable compositions were prepared according to the formulations in Table 6 using a rotor-stator mixer. The viscosities of the resulting inks were measured using a REL cone and plate viscometer large cone speed 2 at 25°C and found all to lie in a range from 0.9-1.4 Pa s. The compositions were printed by hand through a 150T mesh on a range of plastic substrates, in single and multiple layers, ultra-violet cured at 125mJ/ cm2 per layer on a Natgraph curing unit on the rigid PVC and 250mJ/cm2 on the other substrates. The adhesion of the inks was assessed using cross hatch ISO 2049 and pencil hardness. Example 2H, containing no methyl phenyl glyoxylate, is comparative. Examples 21, 2J, 2K and 2L are all inventive. For this particular formulation and substrates, Examples 2J and 2K have improved performance, but it is understood that for other formulations and applications, Examples 21 and 2L may also be suitable.

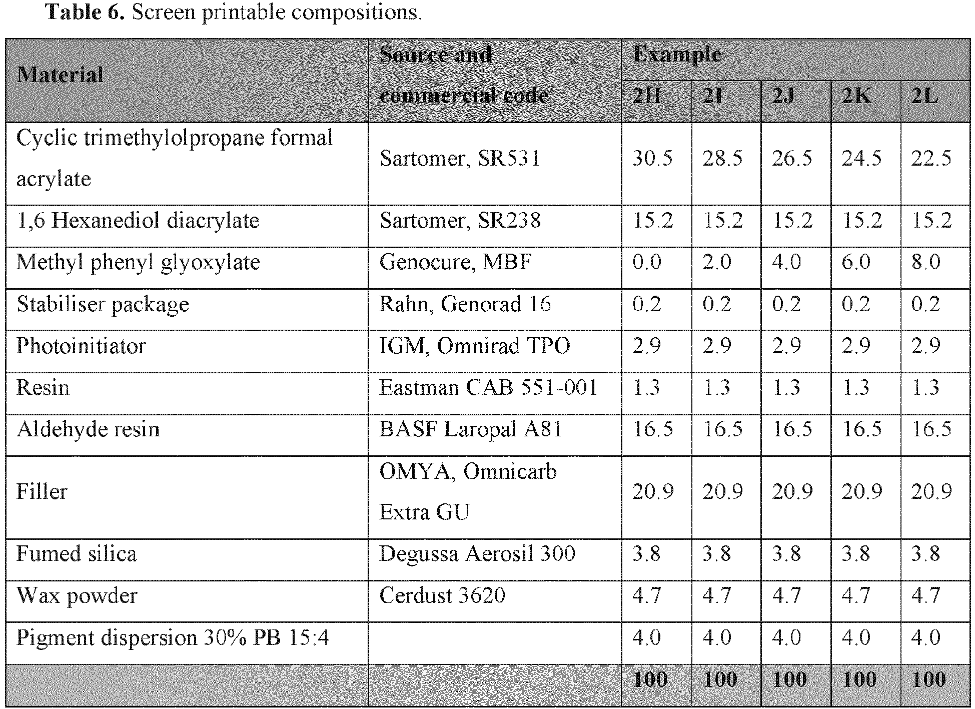

**Table 7. Screen Printing Compositions Adhesion & Pencil Hardness Testing (ISO 2049).**

| **Formulation** | **No of Layers** | **Cross-hatch Tape Rigid PVC** | **Pencil Hardness Rigid PVC** | **Cross-hatch Tape Clear PC** | **Pencil Hardness Clear PC** |
|---|---|---|---|---|---|
| Cyan 2H | 1 | No cure | No cure | No cure | No cure |
| Cyan 2H | 4 | No cure | No cure | No cure | No cure |
| Cyan 2I | 1 | 0 | 2H | 0 | H |
| Cyan 2I | 4 | 0 | 2H | 5 | HB |
| Cyan 2J | 1 | 0 | 2H | 0 | H |
| Cyan 2J | 4 | 0 | H | 0 | H |
| Cyan 2K | 1 | 0 | 2H | 0 | H |
| Cyan 2K | 4 | 0 | H | 0 | H |
| Cyan 2L | 1 | 0 | H | 0 | 2H |
| Cyan 2L | 4 | 0 | HB | 0 | H |

| | | | | | |
|---|---|---|---|---|---|
| (0 = no removal; 5 = greater than 65% removal) | | | | | |

The results in Table 7 demonstrate the adhesion and pencil hardness of inks containing methyl phenylglyoxylate at 0-8% in screen printable Examples 2H-2L. Example 2H produced insufficient cure and a too soft film for testing; 21 produces good results on rigid PVC, but is inferior on PC; Example 2L on the other hand has poor results on rigid PVC, but improved results on PC. Examples 2J and 2K (4% and 6% methyl phenylglyoxylate) produced good results on both substrates and thus are preferred examples.

### Impact Resistance

Examples 2H-2L were printed using a 150T mesh on 240 micron white rigid PVC, 1-4 layers, cured using a Natgraph medium pressure mercury ultra-violet curing unit, with 250mJ./cm2 per layer. The 4 layer build was impact tested using a Sheen impact tester with a 1 kg semi-circular impacter was used with drop heights of 10cm, 20cm and 30cm see Table 8 below. These tests are comparative in nature.

**Table 8. Impact Resistance Results**

| **Formulation** | **Drop height 10 cm** | **Drop height 20 cm** | **Drop height 30 cm** |
|---|---|---|---|
| Cyan 2H | NOT TESTED | NOT TESTED | NOT TESTED |
| Cyan 2I | FILM OK | FILM OK | FILM BREAKS |
| Cyan 2J | FILM OK | FILM OK | FILM OK |
| Cyan 2K | FILM OK | FILM OK | FILM OK |
| Cyan 2L | FILM OK | FILM OK | FILM OK |

| | | | |
|---|---|---|---|
| FILM OK = printed substrate dented, but intact with no breaks. FILM BREAKS = in places, both film and substrate shatters. | | | |

The results in Table 8 demonstrate that Examples 2J-2L, containing methyl phenylglyoxylate in the range 4-8% have superior impact resistant performance to the 2% in Example 21. Example 2H was too soft for impact resistance testing. Examples 2J-2L have very good impact resistance coupled with good adhesion to the substrate even in thick layer builds.

### Squeegee swelling

Squeegee swelling tendencies of Examples 2H-2L were assessed by the internally developed test described above. The results are recorded in Table 9 below.

**Table 9. Squeegee Swelling Results.**

| **Example** | **Swelling microns Marathon Red TS** | **Swelling microns Printmor Green** |
|---|---|---|
| Cyan 2H | 44 | 46 |
| Cyan 2I | 47 | 52 |
| Cyan 2J | 51 | 54 |
| Cyan 2K | 53 | 57 |
| Cyan 2L | 54 | 57 |

The results in Table 9 demonstrate that the formulations of the present invention show increasing squeegee swelling as a function of increasing methyl phenyl glyoxylate concentration (0-8%). Formulation 2H, containing no methyl phenylglyoxylate, is not usable due to insufficient cure. Swelling is low in 2H, but the system is not viable due to no curing. 21 is lower than the inventive 2J, 2K, but adhesion is reduced (see below).

### Adhesion

The inks in Table 6 were printed onto Priplac sheet (polypropylene) Correx (fluted polypropylene), polycarbonate, rigid polystyrene, rigid acrylic and rigid PETG using a 150T mesh and cured at a dose of 250mJ/cm2 per layer under a medium pressure mercury arc lamp on a Natgraph UV rig. Their adhesion to the test substrates was then tested for 1 layer and 4 layers, with the cross-hatch adhesion test (ISO 2409) using a cutter and Tessa adhesive tape. Results are given in numerical categories according to the amount of ink removed from zero (perfect, no ink removed) to 5 (>65% ink removed). These results are given in Table 10.

**Table 10. Adhesion Results**

| **Example** | **Crosshatch adhesion test results** | | | | | |
|---|---|---|---|---|---|---|
| | **Polypropylene sheet** | **Polycarbonate** | **Fluted Polypropylene** | **Rigid Polystyrene** | **Rigid PMMA** | **Rigid PETG** |
| 2H (1L) | - | - | - | | - | - |
| 2H (4L) | - | - | - | - | - | - |
| 2I (1L) | 0 | 0 | 0 | 0 | 3 | 0 |
| 2I (4L) | 0 | 5 | 0 | 0 | 5 | 0 |
| 2J (1L) | 0 | 0 | 0 | 0 | 2 | 0 |
| 2J (4L) | 0 | 0 | 0 | 0 | 5 | 0 |
| 2K (1L) | 0 | 0 | 0 | 0 | 2 | 0 |
| 2K (4L) | 0 | 0 | 0 | 0 | 5 | 0 |
| 2L (1L) | 0 | 0 | 0 | 0 | 2 | 0 |
| 2L (4L) | 0 | 0 | 0 | 0 | 5 | 0 |

The results in Table 10 demonstrate that the preferred inventive material methyl phenylglyoxylate used in screen printable formulations in concentrations between (0 to 8 wt%) 2H-2L exhibit significantly improved adhesion in the range of 4-8% (2J-2L). The results are superior in performance to standard formulations containing NVC previously shown in Table 4 as 1G. Note: the formulation 2H was not tested as the film was so poorly cured that is was too sticky to handle and could be removed without the need for cross hatching.

### Example 3: Properties of Blending White Screen Inks Containing Phenylglyoxylates White screen printing compositions were prepared according to the formulations in Table 11.

The components were mixed using a rotor-stator mixer (Silverson) until the dispersion grind was less than 10 microns. The resulting inks were measured on a REL cone and plate viscometer with a small cone speed 2 at 25°C. The ink viscosities were measured and found to be all in the range 0.8-1.5 Pa·s. Example 3C, containing methyl phenylglycoxalate, is inventive. Examples 3A, 3B, 3D and 3E are comparative.

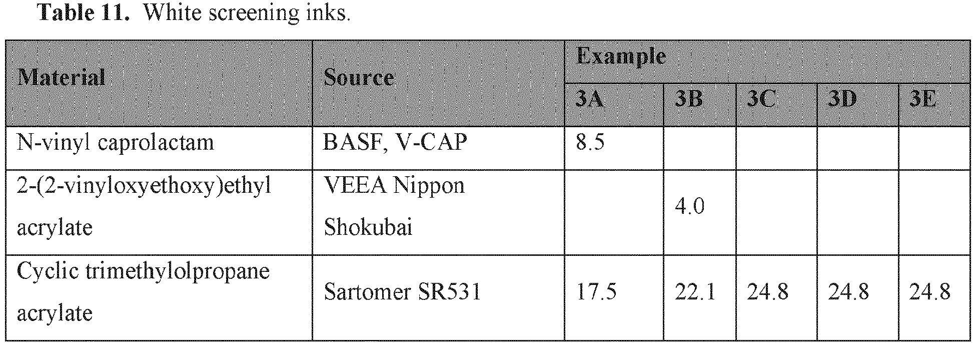

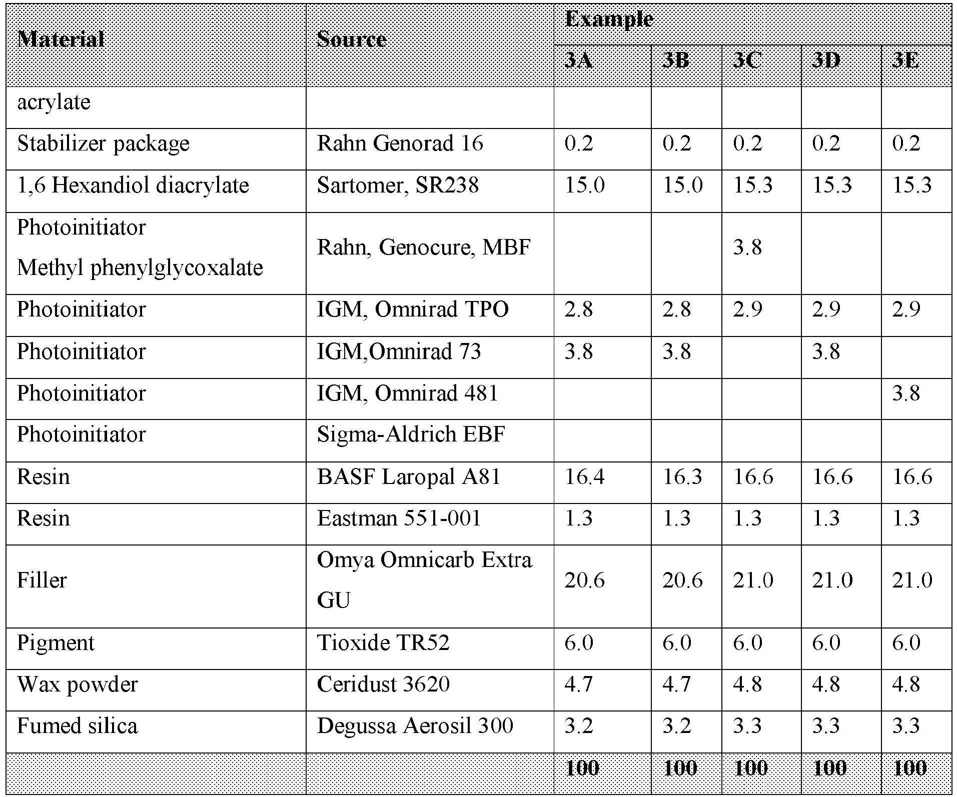

### Print testing of the ink formulations

The white ink formulations were printed using a 140T mesh screen onto clear sheet substrates, polycarbonate, polyester, PETG and rigid polyvinyl chloride and ultra-violet cured using a Natgraph unit with 120 W/cm medium pressure mercury lamps. The resulting prints were assessed for cross hatch adhesion using ISO 2409 and also pencil scratch hardness. Two sets of prints were produced, on Autostat CT3 100 micron polyester clear sheet, one set with exposure of 250mJ/cm2 and the second with 1000mJ/cm2. The prints were each cut into two parts, one part was aged for a week at 22°C, the other was placed in an environmental chamber (SANYO ATMOS) and the prints stored at 105°C for 7 days. The two sets of prints were assessed for thermal/ultra violet induced yellowing by comparing the room temperature stored prints with the 105°C using an X-Rite Spectro-Eye photo-spectrometer. The yellowing was measured in terms of a delta E difference average over 5 measurements. The results are recorded in Table 12 below. The change in yellowing is measured by the change in delta E, the smaller the change the lower the yellowing on UV exposure and thermal testing. Changes greater than 1.00 may be noticed by eye.

**Table 12. Yellowing Results.**

| **Formulation** | **Exposure mJ/cm²** | **Yellowing Delta E** | **Exposure mJ/cm²** | **Yellowing Delta E** |
|---|---|---|---|---|
| White 3A | 250 | 1.97 | 1000 | 3.00 |
| White 3B | 250 | 0.85 | 1000 | 2.42 |
| White 3C | 250 | 0.93 | 1000 | 1.86 |
| White 3D | 250 | 0.60 | 1000 | 1.75 |
| White 3E | 250 | 0.70 | 1000 | 1.61 |

The results in Table 12 demonstrate that inventive Example 3C is more resistant to both thermal and UV/ thermal yellowing than 3A and 3B containing N-vinyl caprolactam and VEEA respectively. Examples 3D and 3E, containing other low yellowing photo-initiators, are slightly better than the inventive composition 3C. The hydroxyketone initiators in 3D and 3E are comparative and are low yellowing, but do not enhance adhesion - see Table 13.

### Substrate adhesion

The adhesion as discussed herein above was assessed for the test formulations using cross hatch tape and a pencil hardness tester on prints cured with 250mJ/cm2 per layer using a Natgraph ultra-violet curing unit. The results of the adhesion testing are shown in Table 13. The cross hatch tape results were not recorded as all the formulations using the test had excellent adhesion (0) with no removal.

**Table 13. Pencil Hardness Results**

| **Formulation number** | **Pencil hardness Polycarbonate 240 microns** | **Pencil hardness Rigid PVC 240 microns** | **Pencil hardness PETG 500 microns** | **Pencil hardness Polyester 100 microns** |
|---|---|---|---|---|
| White 3A | 3H | 2H | H | 3H |
| White 3B | 2H | H | 2H | 3H |
| White 3C | 2H | 2H | 2H | 3H |
| White 3D | 2H | H | H | 2H |
| White 3E | 2H | H | H | 2H |

Inventive Example 3C, containing methyl phenylglyoxylate, showed good adhesion to all the substrates and was slightly less hard than Example 3A (which is based on n-vinyl caprolactam) when printed on polycarbonate. Example 3B containing (VEEA) is slightly worse than 3C on rigid PVC. Examples 3D and 3E are worse for pencil hardness than the inventive composition 3C.

**Table 14. Visual Discoloration and Odour Results.**

| **Formulation number** | **Visual color after 7 days at 80°C** | **Odor after 7 days at 80°C. Scale 1-5 (1 being best)** | **Visual color Initially** | **Odor Initially Scale 1-5 (1 being best)** |
|---|---|---|---|---|
| 3A | Cream | 4/5 | White | 3/4 |
| 3B | White | 3 | White | 3 |
| 3C | White | 2 | White | 2 |
| 3D | White | 2 | White | 2 |
| 3E | White | 2 | White | 2 |

Small aluminium containers containing 50g each of the above compositions were stored in an oven at 80°C to simulate aging with time. The initial colour and odour were assessed by humans with the odour rated against three criteria; intensity, pleasantness/unpleasantness and persistence on an arbitrary scale 1-5 (1 having the least door and thus being best). The average is recorded in Table 14. Over the 7 day storage period, Examples 3B, 3C, 3D and 3E remained white, while composition 3A based on N-vinylcaprolactam became a yellowish cream colour, which is highly disadvantageous. The inventive Example 3C had an initial low acrylate odour, which did not increase on storage. Examples 3D and 3E followed a similar pattern and contain alternative initiators, which were previously found to have poor cure speed and adhesion. Example 3A, containing N-vinylcaprolactam, had an initially high unpleasant odour which increased markedly on storage. Example 3B, containing VEEA, had higher odour than 3C, but not as strong as 3A.

### Example 4: Flexographic satin inks containing phenylglyoxylate.

Printing ink compositions were prepared according to the formulations in Table 15. The components were mixed with a rotor-stator mixer (Silverson). The resulting inks were measured on a REL cone and plate viscometer with a large cone speed 2 at 25°C. The ink viscosities were measured and found to be in the range 0.4-0.6 Pa·s. Example 4C, containing methyl phenyl glyoxylate, is inventive. Examples 4A, 4B, 4D and 4E are comparative.

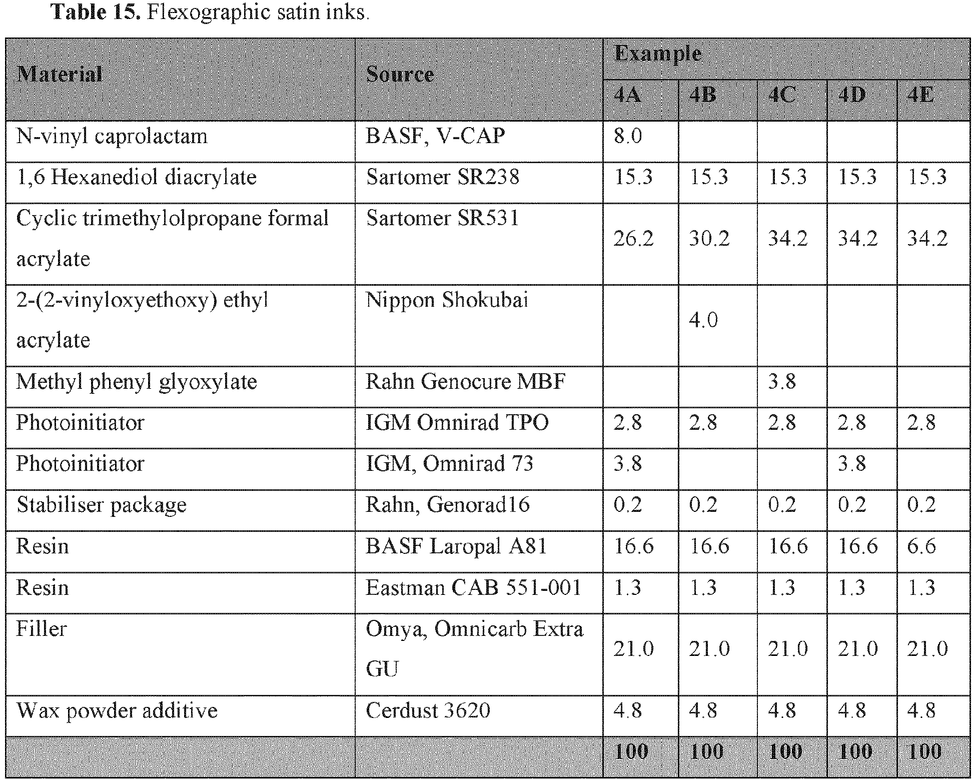

**Table 16: Adhesion and maximum cure speed**

| **Example** | **Substrate** | ***Cure speed mJ/cm²** |
|---|---|---|
| Satin 4A | Baker, PP top coated | 80 |
| Satin 4B | Baker, PP top coated | 80 |
| Satin 4C | Baker, PP top coated | 65 |
| Satin 4D | Baker, PP top coated | 110 |
| Satin 4E | Baker, PP top coated | 110 |

| | | |
|---|---|---|
| *Minimum amount of UV energy required to obtain acceptable cure (full adhesion) - a lower figure represents faster cure speed. | | |

The clear satin examples were hand coated using a yellow coating bar (3-4 microns) on 80 micron gauge top coated polypropylene substrate and cured using a Natgraph unit with medium pressure 120W/cm lamps. The resulting prints were assessed for cross hatch adhesion using ISO2409 and the minimum energy required to obtain acceptable cure (full adhesion, no removal (0)) and no initial surface tack, were assessed and the results are recorded above in Table 16. It is to be noted the formulations in Table 16 are of suitable rheology to be applied via flexographic or bar coating machines. The results show Inventive Example 4C, containing methyl phenyl glyoxylate, has faster cure speed and adhesion than the comparative Example 4A (containing N-vinyl caprolactam), and slightly better than Example 4B containing VEEA. Examples 4D and 4E were much slower with respect to surface tack and softness.

## Claims

1. An energy curable printing ink or coating composition comprising
a) between 0.5 to 10 wt% of methyl phenyl glyoxylate,
b) between 10 to 60 wt% of at least one monofunctional acrylate or methacrylate monomer,
c) between 10 to 25 wt% of at least one difunctional acrylate or methacrylate monomer, and optionally further comprising between 0.1 to 10 wt% of at least one trifunctional or higher acrylate or methacrylate monomer;
d) less than 5 wt% high solvency monofunctional monomers selected from vinyl amides, N-vinyl pyrollidone, N-vinyl formamide, acrylamides, substituted acrylamides, tetrahydrofurfuryl acrylate, tetrahydrofurfuryl methacrylate, ethoxyethoxy ethyl acrylate, vinyloxyethoxy ethyl acrylate, hydroxyethyl acrylate, caprolactone, caprolactone acrylate, cyclohexyl vinylether and divinylbenzene; wherein the printing ink or coating composition is free of N-vinyl caprolactam and acryloylmorpholine.

2. A printing ink or coating composition according to claim 1 comprising between 0.1 to 60 wt% of at least one mono or multifunctional acrylate or methacrylate oligomer.

3. A printing ink or coating composition according to any one of the preceding claims comprising
a) between 0.1 to 25 wt% of a resin, and/or
b) between 0.1 to 15 wt% of at least one further additional photoinitiator, and/or
c) no greater than 5 wt% of non reactive organic solvents, and/or
d) no greater than 5 wt% of water.

4. A printing ink or coating composition according to any one of the preceding claims comprising between 1 to 8 wt% of methyl phenyl glyoxylate, or between 2 to 6 wt% of methyl phenyl glyoxylate, or between 3 to 5 wt% of methyl phenyl glyoxylate.

5. A printing ink or coating composition according to any one of the preceding claims comprising between 15 to 50 wt% of at least one monofunctional acrylate or methacrylate monomer, or between 20 to 40 wt% of at least one monofunctional acrylate or methacrylate monomer, and/or between 10 to 20 wt% of at least one difunctional acrylate or methacrylate monomer, or between 12 to 18 wt% of at least one difunctional acrylate or methacrylate monomer.

6. A printing ink or coating composition according to any one of the preceding claims wherein the monofunctional acrylate or methacrylate monomer is an ethylenically unsaturated monomer.

7. A printing ink or coating composition according to any one of the preceding claims where the monofunctional acrylate or methacrylate monomer is selected from C₁₂ to C₁₄ alkyl methacrylate, C₁₆ to C₁₈ alkyl acrylate, C₁₆ to C₁₈ alkyl methacrylate, isodecyl acrylate, lauryl acrylate, methoxy polyethylene glycol (350) mono-methacrylate, octydecyl acrylate, polypropylene glycol monomethacrylate, stearyl acrylate and tridecyl acrylate and mixtures thereof.

8. A printing ink or coating composition according to any one of claims 1-6 wherein the monofunctional acrylate or methacrylate monomer has a cyclic structure, or wherein the monofunctional acrylate or methacrylate monomer is selected from phenoxyethyl acrylate (PEA), cyclic trimethyl propane formal acrylate (CTFA), isobornyl (meth) acrylate (IBOA), t-butyl cyclohexyl acrylate, 3,3,5,-trimethyl cyclo-hexyl acrylate and ethoxylated (4) nonyl phenol acrylate and mixtures thereof, pref-erably wherein the monofunctional acrylate or methacrylate monomer is cyclic trimethyl propane formal acrylate (CTFA).

9. A printing ink or coating composition according to any one of the preceding claims wherein the difunctional acrylate or methacrylate monomer is selected from 3-butylene glycol dimethacrylate, 1,4-butanediol dimethacrylate, 1,6 hexanediol diacrylate, 1,6 hexanediol dimethacrylate, 1, 5 pentadiol diacylate, alkoxylated diacry-late, diethylene glycol dimethacrylate, dipropylene glycol diacrylate, ethoxylated (10) bisphenol A diacrylate, ethoxylated (2) bisphenol A dimethacrylate, ethoxylated (3) bisphenol A diacrylate, ethoxylated (3) bisphenol A dimethacrylate, ethoxylated (4) bisphenol A diacrylate, ethoxylated (4) bisphenol A dimethacrylate, ethoxylated bi-sphenol A dimethacrylate, ethoxylated (10) bisphenol dimethacrylate, ethylene glycol dimethacrylate, polyethylene glycol (200) diacrylate, polyethylene glycol (400) diacry-late, polyethylene glycol (400) dimethacrylate, polyethylene glycol (400) dimethacry-late, polyethylene glycol (600) diacrylate, polyethylene glycol (600) dimethacrylate, polyethylene glycol 400 diacrylate, propoxylated (2) neopentyl glycol diacrylate, tetraethylene glycol diacrylate, tetraethylene glycol dimethacrylate, tricyclodecane dimethanol diacrylate, tricyclodecanedimethanol dimethacrylate, triethylene glycol diacrylate, triethylene glycol dimethacrylate and tripropylene glycol diacrylate and mixtures thereof, preferably wherein the difunctional acrylate or methacrylate mon-omer is selected from 1,6 hexanediol diacrylate, dipropylene glycol diacrylate and 1, 5 pentadiol diacylate, alkoxylated diacrylate and mixtures thereof, more preferably wherein the difunctional acrylate or methacrylate monomer is 1,6 hexanediol diacrylate.

10. A printing ink or coating composition according to any one of the preceding claims further comprising i) a colorant or filler, and/or ii) one or more additives selected from the group consisting of stabilisers, surfactants, defoamers, slip additives, waxes, wetting agents and acidic adhesion promoters.

11. A printing ink or coating composition according to any one of the preceding claims wherein the ink or coating composition is substantially free of cationic photoinitiators, and/or wherein the ink or coating composition contains only free radical photoinitiators..

12. A printing ink or coating composition according to any one of the preceding claims wherein the ink or coating composition is a screen printing ink having a viscosity in the range 0.2 to 5.0 Pa·s, measured on a cone and plate viscometer at 25°C, or wherein the ink or coating composition is a flexographic printing ink having a viscosity in the range 0.1 to 1.0 Pa·s, measured on a cone and plate viscometer at 25°C, or wherein the ink or coating composition is a gravure printing ink having a viscosity in the range 0.01 to 0.2 Pa·s, measured on a cone and plate viscometer at 25°C.

13. A substrate comprising a printing ink or coating composition according to any one of the preceding claims on a surface of the substrate.

14. A method of providing a substrate with a printed ink or coating composition on a surface thereof comprising
a) applying a printing ink or coating composition according to any one of claims 1-12 onto a surface of the substrate, preferably via screen, flexographic or gravure printing, and
b) drying the composition.

## Patentansprüche

1. Energiehärtbare Druckfarben- oder Beschichtungszusammensetzung, umfassend
a) zwischen 0,5 bis 10 Gew.□% Methylphenylglyoxylat,
b) zwischen 10 bis 60 Gew.□% mindestens eines monofunktionellen Acrylat- oder Methacrylatmonomers,
c) zwischen 10 bis 25 Gew.□% mindestens eines difunktionellen Acrylat- oder Methacrylatmonomers und gegebenenfalls ferner umfassend zwischen 0,1 bis 10 Gew.□% mindestens eines trifunktionellen oder höherfunktionellen Acrylat- oder Methacrylatmonomers;
d) weniger als 5 Gew.□% monofunktionelle Monomere mit hohem Lösungsvermögen, die aus Vinylamiden, N-Vinylpyrrollidon, N-Vinylformamid, Acrylamiden, substituierten Acrylamiden, Tetrahydrofurfurylacrylat, Tetrahydrofurfurylmethacrylat, Ethoxyethoxyethylacrylat, Vinyloxyethoxyethylacrylat, Hydroxyethylacrylat, Caprolacton, Caprolactonacrylat, Cyclohexylvinylether und Divinylbenzol ausgewählt sind; wobei die Druckfarben- oder Beschichtungszusammensetzung frei von N-vinylcaprolactam und Acryloylmorpholin ist.

2. Druckfarben- oder Beschichtungszusammensetzung nach Anspruch 1, umfassend zwischen 0,1 bis 60 Gew.□% mindestens eines mono- oder multifunktionellen Acrylat- oder Methacrylatoligomers.

3. Druckfarben- oder Beschichtungszusammensetzung nach einem der vorhergehenden Ansprüche, umfassend
a) zwischen 0,1 bis 25 Gew.□% eines Harzes und/oder
b) zwischen 0,1 bis 15 Gew.□% mindestens eines weiteren zusätzlichen Photoinitiators und/oder
c) nicht mehr als 5 Gew.□% nichtreaktiver organischer Lösungsmittel und/oder
d) nicht mehr als 5 Gew.-% Wasser.

4. Druckfarben- oder Beschichtungszusammensetzung nach einem der vorhergehenden Ansprüche, umfassend zwischen 1 bis 8 Gew.□% Methylphenylglyoxylat oder zwischen 2 bis 6 Gew.□% Methylphenylglyoxylat oder zwischen 3 bis 5 Gew.□% Methylphenylglyoxylat.

5. Druckfarben- oder Beschichtungszusammensetzung nach einem der vorhergehenden Ansprüche, umfassend zwischen 15 bis 50 Gew.□% mindestens eines monofunktionellen Acrylat- oder Methacrylatmonomers oder zwischen 20 bis 40 Gew.□% mindestens eines monofunktionellen Acrylat- oder Methacrylatmonomers und/oder zwischen 10 bis 20 Gew.□% mindestens eines difunktionellen Acrylat- oder Methacrylatmonomers oder zwischen 12 bis 18 Gew.□% mindestens eines difunktionellen Acrylat- oder Methacrylatmonomers.

6. Druckfarben- oder Beschichtungszusammensetzung nach einem der vorhergehenden Ansprüche, wobei es sich bei dem monofunktionellen Acrylat- oder Methacrylatmonomer um ein ethylenisch ungesättigtes Monomer handelt.

7. Druckfarben- oder Beschichtungszusammensetzung nach einem der vorhergehenden Ansprüche, wobei das monofunktionelle Acrylat- oder Methacrylatmonomer aus C₁₂- bis C₁₄-Alkylmethacrylat, C₁₆- bis C₁₈-Alkylacrylat, C₁₆- bis C₁₈-Alkylmethacrylat, Isodecylacrylat, Laurylacrylat, Methoxypolyethylenglykol (350), Monomethacrylat, Octyldecylacrylat, Polypropylenglykolmonomethacrylat, Stearylacrylat und Tridecylacrylat und Mischungen davon ausgewählt ist.

8. Druckfarben- oder Beschichtungszusammensetzung nach einem der Ansprüche 1-6, wobei das monofunktionelle Acrylat- oder Methacrylatmonomer eine cyclische Struktur aufweist oder wobei das monofunktionelle Acrylat- oder Methacrylatmonomer aus Phenoxyethylacrylat (PEA), cyclischem Trimethylpropan-Formalacrylat (CTFA), Isobornyl(meth)acrylat (IBOA), t-Butylcyclohexylacrylat, 3,3,5-Trimethylcyclohexylacrylat und ethoxyliertes (4)-Nonylphenolacrylat und Mischungen davon ausgewählt ist, wobei es sich bei dem monofunktionellen Acrylat- oder Methacrylatmonomer vorzugsweise um cyclisches Trimethylpropan-Formalacrylat (CTFA) handelt.

9. Druckfarben- oder Beschichtungszusammensetzung nach einem der vorhergehenden Ansprüche, wobei das difunktionelle Acrylat- oder Methacrylatmonomer aus 3-Butylenglykoldimethacrylat, 1,4-Butandioldimethacrylat, 1,6-Hexandioldiacrylat, 1,6-Hexandioldimethacrylat, 1,5-Pentadioldiacrylat, alkoxyliertem Diacrylat, Diethylenglykoldimethacrylat, Dipropylenglykoldiacrylat, ethoxyliertem (10)-Bisphenol-A-diacrylat, ethoxyliertem (2)-Bisphenol-A-dimethacrylat, ethoxyliertem (3)-Bisphenol-A-diacrylat, ethoxyliertem (3)-Bisphenol-A-dimethacrylat, ethoxyliertem (4)-Bisphenol-A-diacrylat, ethoxyliertem (4)-Bisphenol-A-dimethacrylat, ethoxyliertem Bisphenol-A-dimethacrylat, ethoxyliertem (10)-Bisphenoldimethacrylat, Ethylenglykoldimethacrylat, Polyethylenglykol (200)-diacrylat, Polyethylenglykol (400)-diacrylat, Polyethylenglykol (400)-dimethacrylat, Polyethylenglykol (400)-dimethacrylat, Polyethylenglykol (600)-diacrylat, Polyethylenglykol (600)-dimethacrylat, Polyethylenglycol (400)-diacrylat, propoxyliertes (2)-Neopentylglykoldiacrylat, Tetraethylenglykoldiacrylat, Tetraethylenglykoldimethacrylat, Tricyclodecandimethanoldiacrylat, Tricyclodecandimethanoldimethacrylat, Triethylenglykoldiacrylat, Triethylenglykoldimethacrylat und Tripropylenglykoldiacrylat und Mischungen davon ausgewählt ist, wobei das difunktionelle Acrylat- oder Methacrylatmonomer vorzugsweise aus 1,6-Hexandioldiacrylat, Dipropylenglykoldiacrylat und 1,5-Pentadioldiacrylat, alkoxyliertem Diacrylat und Mischungen davon ausgewählt ist, wobei es sich bei dem difunktionellen Acrylat- oder Methacrylatmonomer weiter bevorzugt um 1,6-Hexandioldiacrylat handelt.

10. Druckfarben- oder Beschichtungszusammensetzung nach einem der vorhergehenden Ansprüche, ferner umfassend i) ein Farbmittel oder einen Füllstoff und/oder ii) ein oder mehrere Additive, die aus der Gruppe bestehend aus Stabilisatoren, Tensiden, Entschäumern, Slipadditiven, Wachsen, Netzmitteln und sauren Haftvermittlern ausgewählt sind.

11. Druckfarben- oder Beschichtungszusammensetzung nach einem der vorhergehenden Ansprüche, wobei die Druckfarben- oder Beschichtungszusammensetzung weitestgehend frei von kationischen Photoinitiatoren ist und/oder wobei die Druckfarben- oder Beschichtungszusammensetzung nur radikalische Photoinitiatoren enthält.

12. Druckfarben- oder Beschichtungszusammensetzung nach einem der vorhergehenden Ansprüche, wobei es sich bei der Druckfarben- oder Beschichtungszusammensetzung um eine Siebdruckfarbe mit einer auf einem Platte-und-Kegel-Viskosimeter bei 25 °C gemessenen Viskosität im Bereich von 0,2 bis 5,0 Pa·s handelt oder wobei es sich bei der Druckfarben- oder Beschichtungszusammensetzung um eine Flexodruckfarbe mit einer auf einem Platte-und-Kegel-Viskosimeter bei 25 °C gemessenen Viskosität im Bereich von 0,1 bis 1,0 Pa·s handelt oder wobei es sich bei der Druckfarben- oder Beschichtungszusammensetzung um eine Tiefdruckfarbe mit einer auf einem Platte-und-Kegel-Viskosimeter bei 25 °C gemessenen Viskosität im Bereich von 0,01 bis 0,2 Pa·s handelt.

13. Substrat, umfassend die Druckfarben- oder Beschichtungszusammensetzung nach einem der vorhergehenden Ansprüche auf einer Oberfläche des Substrats.

14. Verfahren zur Bereitstellung eines Substrats mit einer gedruckten Farb- oder Beschichtungszusammensetzung auf einer Oberfläche davon, umfassend
a) Aufbringen einer Druckfarben- oder Beschichtungszusammensetzung nach einem der Ansprüche 1-12 auf eine Oberfläche des Substrats, vorzugsweise durch Sieb-, Flexo- oder Tiefdruck, und
b) Trocknen der Zusammensetzung.

## Revendications

1. Composition d'encre d'impression ou de revêtement durcissable par énergie comprenant
a) entre 0,5 et 10 % en poids de phénylglyoxylate de méthyle,
b) entre 10 et 60 % en poids d'au moins un monomère monofonctionnel de type acrylate ou méthacrylate,
c) entre 10 et 25 % en poids d'au moins un monomère difonctionnel de type acrylate ou méthacrylate, et éventuellement comprenant en outre entre 0,1 et 10 % en poids d'au moins un monomère trifonctionnel ou plus hautement fonctionnalisé de type acrylate ou méthacrylate ;
d) moins de 5 % en poids de monomères monofonctionnels à pouvoir dissolvant élevé choisis parmi des vinylamides, la N-vinylpyrrolidone, le N-vinylformamide, des acrylamides, des acrylamides substitués, l'acrylate de tétrahydrofurfuryle, le méthacrylate de tétrahydrofurfuryle, l'acrylate d'éthoxyéthoxyéthyle, l'acrylate de vinyloxyéthoxyéthyle, l'acrylate d'hydroxyéthyle, la caprolactone, l'acrylate de caprolactone, le cyclohexylevinyléther et le divinylbenzène ; la composition d'encre d'impression ou de revêtement étant exempte de N-vinylcaprolactame et d'acryloylmorpholine.

2. Composition d'encre d'impression ou de revêtement selon la revendication 1 comprenant entre 0,1 et 60 % en poids d'au moins un oligomère monofonctionnel ou multifonctionnel de type acrylate ou méthacrylate.

3. Composition d'encre d'impression ou de revêtement selon l'une quelconque des revendications précédentes comprenant
a) entre 0,1 et 25 % en poids d'une résine, et/ou
b) entre 0,1 et 15 % en poids d'au moins un photoinitiateur supplémentaire, et/ou
c) pas plus de 5 % en poids de solvants organiques non réactifs, et/ou
d) pas plus de 5 % en poids d'eau.

4. Composition d'encre d'impression ou de revêtement selon l'une quelconque des revendications précédentes comprenant entre 1 et 8 % en poids de phénylglyoxylate de méthyle, ou entre 2 et 6 % en poids de phénylglyoxylate de méthyle, ou entre 3 et 5 % en poids de phénylglyoxylate de méthyle.

5. Composition d'encre d'impression ou de revêtement selon l'une quelconque des revendications précédentes comprenant entre 15 et 50 % en poids d'au moins un monomère monofonctionnel de type acrylate ou méthacrylate, ou entre 20 et 40 % en poids d'au moins un monomère monofonctionnel de type acrylate ou méthacrylate, et/ou entre 10 et 20 % en poids d'au moins un monomère difonctionnel de type acrylate ou méthacrylate, ou entre 12 et 18 % en poids d'au moins un monomère difonctionnel de type acrylate ou méthacrylate.

6. Composition d'encre d'impression ou de revêtement selon l'une quelconque des revendications précédentes, le monomère monofonctionnel de type acrylate ou méthacrylate étant un monomère éthyléniquement insaturé.

7. Composition d'encre d'impression ou de revêtement selon l'une quelconque des revendications précédentes dans laquelle le monomère monofonctionnel de type acrylate ou méthacrylate est choisi parmi un méthacrylate de C₁₂₋₁₄-alkyle, un acrylate de C₁₆₋₁₈-alkyle, un méthacrylate de C₁₆-₁₈-alkyle, l'acrylate d'isodécyle, l'acrylate de lauryle, un monométhacrylate de méthoxy polyéthylèneglycol (350), l'acrylate d'octydécyle, un monométhacrylate de polypropylèneglycol, l'acrylate de stéaryle et l'acrylate de tridécyle et des mélanges correspondants.

8. Composition d'encre d'impression ou de revêtement selon l'une quelconque des revendications 1 à 6, le monomère monofonctionnel de type acrylate ou méthacrylate possédant une structure cyclique, ou le monomère monofonctionnel de type acrylate ou méthacrylate étant choisi parmi l'acrylate de phénoxyéthyle (PEA), l'acrylate de triméthylolpropane formal cyclique (CTFA), un (méth)acrylate d'isobornyle (IBOA), l'acrylate de t-butylcyclohexyle, l'acrylate de 3,3,5-triméthylcyclohexyle et l'acrylate de nonylphénol éthoxylé (4) et des mélanges correspondants, préférablement le monomère monofonctionnel de type acrylate ou méthacrylate étant l'acrylate de triméthylolpropane formal cyclique (CTFA).

9. Composition d'encre d'impression ou de revêtement selon l'une quelconque des revendications précédentes, le monomère difonctionnel de type acrylate ou méthacrylate étant choisi parmi le diméthacrylate de 3-butylèneglycol, le diméthacrylate de 1,4-butanediol, le diacrylate de 1,6-hexanediol, le diméthacrylate de 1,6-hexanediol, le diacrylate de 1,5-pentanediol, un diacrylate alcoxylé, le diméthacrylate de diéthylèneglycol, le diacrylate de dipropylèneglycol, le diacrylate de bisphénol A éthoxylé (10), le diméthacrylate de bisphénol A éthoxylé (2), le diacrylate de bisphénol A éthoxylé (3), le diméthacrylate de bisphénol A éthoxylé (3), le diacrylate de bisphénol A éthoxylé (4), le diméthacrylate de bisphénol A éthoxylé (4), le diméthacrylate de bisphénol A éthoxylé , le diméthacrylate de bisphénol éthoxylé (10), le diméthacrylate d'éthylèneglycol, un diacrylate de polyéthylèneglycol (200), un diacrylate de polyéthylèneglycol (400), un diméthacrylate de polyéthylèneglycol (400), un diméthacrylate de polyéthylèneglycol (400), un diacrylate de polyéthylèneglycol (600), un diméthacrylate de polyéthylèneglycol (600), un diacrylate de polyéthylèneglycol 400, le diacrylate de néopentylglycol propoxylé (2), le diacrylate de tétraéthylèneglycol, le diméthacrylate de tétraéthylèneglycol, le diacrylate de tricyclodécanediméthanol, le diméthacrylate de tricyclodécanediméthanol, le diacrylate de triéthylèneglycol, le diméthacrylate de triéthylèneglycol et le diacrylate de tripropylèneglycol et des mélanges correspondants, préférablement le monomère difonctionnel de type acrylate ou méthacrylate étant choisi parmi le diacrylate de 1,6-hexanediol, le diacrylate de dipropylèneglycol et le diacrylate de 1,5-pentanediol, un diacrylate alcoxylé et des mélanges correspondants, plus préférablement le monomère difonctionnel de type acrylate ou méthacrylate étant le diacrylate de 1,6-hexanediol.

10. Composition d'encre d'impression ou de revêtement selon l'une quelconque des revendications précédentes comprenant en outre i) un colorant ou une charge, et/ou ii) un ou plusieurs additifs choisis dans le groupe constitué par des stabilisants, des tensioactifs, des antimousses, des additifs de glissement, des cires, des agents mouillants et des promoteurs d'adhérence acides.

11. Composition d'encre d'impression ou de revêtement selon l'une quelconque des revendications précédentes, la composition d'encre ou de revêtement étant sensiblement exempte de photoinitiateurs cationiques et/ou la composition d'encre ou de revêtement contenant seulement des photoinitiateurs de radicaux libres.

12. Composition d'encre d'impression ou de revêtement selon l'une quelconque des revendications précédentes, la composition d'encre ou de revêtement étant une encre sérigraphique possédant une viscosité dans la plage de 0,2 à 5,0 Pa.s, mesurée sur un viscosimètre à cône et plaque à 25 °C, ou la composition d'encre ou de revêtement étant une encre d'impression flexographique possédant une viscosité dans la plage de 0,1 à 1,0 Pa.s, mesurée sur un viscosimètre à cône et plaque à 25 °C, où la composition d'encre ou de revêtement étant une encre d'impression héliographique possédant une viscosité dans la plage de 0,01 à 0,2 Pa.s, mesurée sur un viscosimètre à cône et plaque à 25 °C.

13. Substrat comprenant une composition d'encre d'impression ou de revêtement selon l'une quelconque des revendications précédentes sur une surface du substrat.

14. Procédé de mise à disposition d'un substrat comportant une composition d'encre imprimée ou de revêtement sur une surface de celui-ci comprenant
a) l'application d'une composition d'encre d'impression ou de revêtement selon l'une quelconque des revendications 1 à 12 sur une surface du substrat, préférablement via une impression sérigraphique, flexographique ou héliographique, et
b) le séchage de la composition.
